# EUROPÄISCHE PATENTSCHRIFT

(11) **EP 3 628 579 B1**
(45) Veröffentlichungstag und Bekanntmachung des Hinweises auf die Patenterteilung: **02.06.2021**
(21) Anmeldenummer: 19199237.9
(22) Anmeldetag: 24.09.2019
(51) Int. Cl.: B62M 6/90

(54) **ANTRIEBSVORRICHTUNG FÜR EIN ELEKTROFAHRRAD MIT SCHWENKBAREM MOTORSTECKVERBINDER**
DRIVING DEVICE FOR AN ELECTRIC BICYCLE WITH PIVOTABLE MOTOR PLUG-IN CONNECTOR
DISPOSITIF D'ENTRAÎNEMENT POUR UNE BICYCLETTE ÉLECTRIQUE POURVUE DE CONNECTEUR ENFICHABLE DE MOTEUR PIVOTANT

(30) Priorität: 25.09.2018 DE 102018216376
(43) Veröffentlichungstag der Anmeldung: 01.04.2020
(73) Patentinhaber: Brose Antriebstechnik GmbH & Co. Kommanditgesellschaft, Berlin, 10553 Berlin (DE)
(72) Erfinder: BOCK, Michael, Berlin 13587 (DE); HEINZ, Markus, 13597 Berlin (DE)
(74) Vertreter: Maikowski & Ninnemann Patentanwälte Partnerschaft mbB

(56) Entgegenhaltungen:
- EP-A1- 2 230 164
- EP-A1- 2 913 261
- DE-A1-102016 103 506
- DE-A1-102018 200 891

## Beschreibung

Die vorgeschlagene Lösung betrifft eine Antriebsvorrichtung für ein Elektrofahrrad mit einem Elektromotor und einer Energiespeichereinheit zur Versorgung des Elektromotors mit elektrischer Energie.

Bei Elektrofahrrädern ist zur Versorgung mindestens eines Elektromotors des Elektrofahrrades mit elektrischer Energie eine Energiespeichereinheit, zum Beispiel mit mindestens einem Akkumulator (kurz: Akku), vorgesehen und an einem Träger gehalten. Bei einem solchen Träger kann es sich beispielsweise um ein Teil eines Rahmens des Elektrofahrrades handeln oder um ein mit einem solchen Rahmen zu verbindendes Bauteil. Die Energiespeichereinheit ist hierbei dann regelmäßig lösbar an dem rahmenfesten Träger gehalten, um die Energiespeichereinheit bei Bedarf von dem Träger entnehmen zu können, beispielsweise um die Energiespeichereinheit an ein separates Ladegerät anschließen zu können.

Für die elektrische Kontaktierung sind üblicherweise Steckverbinder vorgesehen. Derart kann ein erster Steckverbinder der Energiespeichereinheit mit einem an dem Träger vorgesehenen zweiten Steckverbinder verbunden werden, um die an den Träger angebrachte Energiespeichereinheit mit dem Elektromotor (oder mehrere Elektromotoren) elektrisch zu verbinden und den Elektromotor mit Strom versorgen zu können. Aus der Praxis sind auch sogenannte Messerkontakte bekannt, um eine Energiespeichereinheit mit dem Elektromotor zu verbinden und derart einen Anschluss an den Elektromotor zu erreichen

Bei einer aus der EP 3 118 096 A1 bekannten Antriebsvorrichtung ist ferner beispielsweise eine Energiespeichereinheit vorgeschlagen, bei der an einer Oberseite mindestens ein erster Steckverbinder vorgesehen ist. Dieser erste Steckverbinder wird an einen trägerseitigen zweiten Steckverbinder gesteckt, wenn die Energiespeichereinheit bestimmungsgemäß an ein rahmenfestes Unterrohr des Fahrradrahmens als Träger montiert wird. Die hier vorgeschlagenen Steckverbindungen sind augenscheinlich herstellerspezifisch und nicht ohne weiteres standardisierbar. Darüber hinaus ist eine elektrische Verbindung zwischen der Energiespeichereinheit und dem Elektromotor lediglich in genau einer Betriebslage der Energiespeichereinheit gegeben. Wird die Energiespeichereinheit - nach Lösen einer Verriegelung - an dem Träger in eine Entnahmelage überführt, wird augenblicklich die Verbindung zum Elektromotor und einer sprechenden Steuerelektronik getrennt. Etwaige über die Energiespeichereinheit mit elektrischer Energie versorgte Funktionen stehen damit an dem Elektrofahrrad nicht mehr zur Verfügung, auch wenn beispielsweise die Energiespeichereinheit lediglich geringfügig bezüglich des Trägers verlagert wird.

Dokument DE102018200891A1 zeigt die Präambeln der unabhängigen Ansprüche 1 und 13.

Es ist daher Aufgabe der vorgeschlagenen Lösungen, eine in dieser Hinsicht verbesserte Antriebsvorrichtung und insbesondere ein verbessertes Elektrofahrrad bereitzustellen.

Diese Aufgabe ist mit einer Antriebsvorrichtung der Ansprüche 1 und 13 gelöst.

Hiernach ist eine Antriebsvorrichtung für ein Elektrofahrrad vorgeschlagen, bei der ein erster Steckverbinder der Energiespeichereinheit an einem Träger, an dem die Energiespeichereinheit lösbar gehalten ist und an dem ein mit dem ersten Steckverbinder verbundener zweiter Steckverbinder vorgesehen ist, um eine erste Schwenkachse schwenkbar gelagert ist.

Der trägerseitige Steckverbinder ist folglich um eine erste Schwenkachse schwenkbar gelagert und somit beweglich an dem Träger vorgesehen. Der erste Steckverbinder an dem Träger kann somit eine etwaige Verlagerung der Energiespeichereinheit bezüglich des Trägers nachvollziehen, ohne dass eine elektrische Verbindung zwischen dem Elektromotor der Antriebsvorrichtung und der Energiespeichereinheit getrennt wird. Eine derartige Konfiguration gestattet ferner ohne Weiteres die Nutzung handelsüblicher und mithin standardisierter Steckverbinder. Dies wiederum ermöglicht eine größere Variabilität bei der Steckerauswahl, wodurch sich bei der Herstellung der Antriebsvorrichtung Kostenvorteile erzielen lassen können.

Der erste Steckverbinder ist erfindungsgemäss an einem Verbinderbauteil ausgebildet, dass an einem Halter des Trägers um die erste Schwenkachse schwenkbar gelagert ist. Der trägerseitige Halter kann hierbei als separates Bauteil ausgeführt und an dem Träger fixiert sein. Alternativ ist der Halter an dem Träger selbst ausgeformt.

Erfindungsgemäss bildet das Verbinderbauteil zwei Drehlagerabschnitte aus, über die das Verbinderbauteil an dem Halter schwenkbar gelagert ist. Beispielsweise umfassen die zwei Drehlagerabschnitte jeweils einen Drehlagerzapfen, der an dem Halter schwenkbar gelagert ist.

Erfindungsgemäss ist das Verbinderbauteil beispielsweise zumindest teilweise in einem Zwischenraum zwischen zwei Lagerabschnitten des Halters aufgenommen und über die zwei Drehlagerabschnitte an den zwei halterseitigen Lagerabschnitten schwenkbar gelagert. Die zwei Lagerabschnitte des Halters sind dementsprechend über den Zwischenraum zueinander beabstandet. Beispielsweise bilden die zwei Lagerabschnitte Schenkel eines U- oder V-förmigen Lagerbereichs des Halters.

In einer Ausführungsvariante ist an dem Halter für das Verbinderbauteil mit dem ersten Steckverbinder auch die Energiespeichereinheit um eine zweite Schwenkachse schwenkbar gehalten. An dem Halter ist somit mindestens ein weiteres Schwenk- oder Drehlager vorgesehen, um für die Energiespeichereinheit eine zweite Schwenkachse vorzugeben. Der trägerseitige Halter integriert somit mindestens eine zusätzliche Funktion. Die Energiespeichereinheit kann hierbei um die zweite Schwenkachse zwischen einer Betriebslage und einer Entnahmelage schwenkbar sein. In der Betriebslage liegt die Energiespeichereinheit beispielsweise vor, wenn der mindestens eine Elektromotor über die Energiespeichereinheit mit Strom versorgt ist und das Elektrofahrrad damit betriebsbereit ist und elektromotorisch unterstützt gefahren werden kann. In der Entnahmelage kann die Energiespeichereinheit demgegenüber von dem Träger (und damit dem Elektrofahrrad) getrennt werden, beispielsweise um die Energiespeichereinheit an ein separates Ladegerät anzuschließen.

An der Energiespeichereinheit kann mindestens ein Steckabschnitt vorgesehen sein, der an einen die zweite Schwenkachse definierenden Drehlagerabschnitt des Halters gesteckt ist. Über die Steckverbindung zwischen dem Drehlagerabschnitt des Halters und dem Steckabschnitt der Energiespeichereinheit ist die Energiespeichereinheit werkzeuglos mit dem trägerseitigen Halter verbindbar und auch werkzeuglos wieder von dem trägerseitigen Halter lösbar. Gleichzeitig ist über diese Steckverbindung eine Drehlagerung der Energiespeichereinheit an dem trägerseitigen Halter erreicht, sodass die Energiespeichereinheit zwischen einer Betriebslage und einer Entnahmelage schwenkbar ist. So kann die Energiespeichereinheit beispielsweise um die Schwenkachse zwischen der Betriebslage und der Entnahmelage schwenkbar sein, wobei in der Entnahmelage der Steckabschnitt von dem Drehlagerabschnitt einfach abgezogen werden kann, um die Energiespeichereinheit von dem Träger zu entfernen. Umgekehrt kann die Energiespeichereinheit über ihren mindestens einen Steckabschnitt an den Drehlagerabschnitt des Halters gesteckt werden, um anschließend aus der derart eingenommen Entnahmelage an dem Drehlagerabschnitt um die hierüber definierte zweite Schwenkachse in die Betriebslage an dem Träger geschwenkt zu werden.

Beispielsweise ist der Drehlagerabschnitt des Halters stift- oder zapfenförmig ausgebildet. Für die bestimmungsgemäße Anbringung der Energiespeichereinheit, die zum Beispiel ein Akkumulator aufweist, wird dann folglich die Energiespeichereinheit über mindestens einen Steckabschnitt an einen stift- oder zapfenförmigen Drehlagerabschnitt des Halters gesteckt und dann um eine über diesen stift- oder zapfenförmigen Drehlagerabschnitt definierte zweite Schwenkachse in eine Betriebslage an dem Träger verschwenkt. In dieser Betriebslage wird die Energiespeichereinheit dann arretiert, sodass ein mit der Antriebsvorrichtung gemäß der vorgeschlagenen Lösung ausgestattetes Elektrofahrrad wieder betriebsbereit ist.

Grundsätzlich kann die zweite Schwenkachse für die Energiespeichereinheit parallel zu der ersten Schwenkachse für den ersten Steckverbinder verlaufen. Eine Schwenkbewegung der Energiespeichereinheit zwischen ihrer Betriebslage und ihrer Entnahmelage an dem Träger kann somit ohne Weiteres von dem ersten trägerseitigen Steckverbinder nachvollzogen werden.

Erfindungsgemäss ist der erste Steckverbinder an dem Träger senkrecht zu der ersten Schwenkachse verlagerbar gehalten. Die zusätzliche Verlagerbarkeit des ersten Steckverbinders senkrecht zu seiner ersten Schwenkachse kann einerseits die Verbindung mit dem zweiten Steckverbinder der Energiespeichereinheit erleichtern. Zum anderen kann der trägerseitige (und mithin motorseitige) erste Steckverbinder über die zusätzliche Verlagerbarkeit eine einer Schwenkbewegung der Energiespeichereinheit überlagerte - gegebenenfalls auch nur geringfügige - translatorische Bewegung bei einem Überführen von einer Betriebslage in eine Entnahmelage oder umgekehrt ohne Weiteres nachvollziehen, ohne dass hierbei eine Verbindung zwischen den ersten und zweiten Steckverbinder zwingend getrennt wird. Erfindungsgemäss wird ein den ersten Steckverbinder aufweisendes Verbinderbauteil über die zwei Drehlagerabschnitte, über die das Verbinderbauteil an dem Halter schwenkbar gelagert ist, zusätzlich auch senkrecht zu der ersten Schwenkachse verlagerbar gehalten.

Die zwei Drehlagerabschnitte des Verbinderbauteils stellen in dieser Variante somit einerseits eine Schwenkbarkeit um die erste Schwenkachse als auch eine Verlagerbarkeit senkrecht zu der ersten Schwenkachse an dem Halter sicher. Hierfür sind dann beispielsweise die steckerseitigen Drehlagerabschnitte jeweils in einer sich senkrecht zu der ersten Schwenkachse erstreckenden Lagerführung an einem zugeordneten Lagerabschnitt des Halters drehbar und verschieblich gelagert. Derart ist das Verbinderbauteil mit dem ersten Steckverbinder entlang einer Erstreckungsachse der Lagerführungen der beiden einander gegenüberliegende Lagerabschnitte verlagerbar. Gleichzeitig ist das Verbinderbauteil um die erste Schwenkachse schwenkbar, die durch die drehbare Lagerung der Drehlagerabschnitte an den Lagerführungen definiert ist.

Alternativ oder ergänzend kann der erste Steckverbinder senkrecht zu der ersten Schwenkachse angefedert sein. Mit anderen Worten ist in dieser Ausführungsvariante der erste Steckverbinder in eine Richtung senkrecht zu der ersten Schwenkachse über mindestens ein Federelement vorgespannt. Über eine Anfederung des ersten trägerseitigen Steckverbinders kann beispielsweise erreicht werden, dass der erste Steckverbinder stets eine bestimmte Relativlage unter Wirkung mindestens eines Federelements einnimmt. Beispielsweise dient die Anfederung des ersten Steckverbinders der Zentrierung des ersten Steckverbinders nach bestimmungsgemäßer Verbindung mit dem zweiten Steckverbinder der Energiespeichereinheit nach einer Anbringung der Energiespeichereinheit an dem Träger.

Erfindungsgemäss ist vorgesehen, dass der erste Steckverbinder durch mindestens ein Federelement angefedert ist, das zwischen den zwei Lagerabschnitten angeordnet ist, zwischen denen der Zwischenraum für die zumindest teilweise Unterbringung des Verbinderbauteils vorhanden ist. Ein solches Federelement stützt sich dann beispielsweise an einem die beiden Lagerabschnitte verbindenden Verbindungsabschnitt des Halters einerseits und an dem Verbinderbauteil andererseits ab. Beispielsweise ist das mindestens eine Federelement als Druckfeder ausgebildet.

In einer Ausführungsvariante umfasst der erste Steckverbinder einen Rundstecker. Alternativ oder ergänzend kann der zweite Steckverbinder einen Rundstecker umfassen. Bei einem solchen Rundstecker kann es sich um einen handelsüblichen Steckverbinder für eine elektrische Kontaktierung handeln. Über die vorgeschlagene schwenkbare Lagerung des ersten Steckverbinders ist die Verwendung eines handelsüblichen Rundsteckers ohne Weiteres möglich. Selbstverständlich sind aber auch andere Steckergeometrien denkbar.

Der Träger kann grundsätzlich durch einen Rahmen für das Elektrofahrrad, insbesondere durch ein Rahmenteil des Rahmens, z.B. in Form eines Rahmenrohres, gebildet sein. In einer alternativen Ausführungsvariante ist der Träger durch ein an einen Rahmen für das Elektrofahrrad zu montierendes Bauteil gebildet. Während somit in der zuerst genannten Variante der Träger mit dem hieran schwenkbar gelagerten ersten Steckverbinder durch den Rahmen des Elektrofahrrads selbst oder zumindest ein Rahmenteil gebildet ist, sieht die zuletzt genannte Variante als Träger ein Bauteil vor, das nachträglich an den Rahmen des Elektrofahrrads montiert und hieran fixiert wird. Grundsätzlich handelt es sich aber im bestimmungsgemäß an das Elektrofahrrad montierten Zustand der Antriebsvorrichtung bei dem Träger um eine rahmenfeste Komponente, an die die Energiespeichereinheit angebracht und hiervon bei Bedarf wieder entfernt werden kann.

Die vorgeschlagene Lösungen umfassen ferner auch ein Elektrofahrrad mit einer Ausführungsvariante einer vorgeschlagenen Antriebsvorrichtung.

Die beigefügten Figuren veranschaulichen exemplarisch mögliche Ausführungsvarianten der vorgeschlagenen Lösungen.

Hierbei zeigen:
- Figur 1A: einen Träger einer Ausführungsvariante einer vorgeschlagenen Antriebsvorrichtung mit hieran eingesetzter Energiespeichereinheit in Form eines Akkus;
- Figur 1B: in mit der Figur 1A übereinstimmender perspektivischer Ansicht den Träger mit in eine Entnahmelage geschwenkten Akku;
- Figur 2: in Vorderansicht einen Halter des Trägers der Figuren 1A und 1B, an dem ein trägerseitiger und damit motorseitiger erster Steckverbinder schwenkbar gelagert ist, zusammen mit dem Akku in der Entnahmelage;
- Figur 3A: in vergrößertem Maßstab und ausschnittsweise den Halter mit dem motorseitigen ersten Steckverbinder, der mit einem akkuseitigen zweiten Steckverbinder verbunden ist, und dem Akku in einer an den Träger eingeklappten Betriebslage;
- Figur 3B: in mit der Figur 3A übereinstimmender Ansicht den Halter und den in seine Entnahmelage geschwenkten und bereits abgezogenem Akku;
- Figur 4: in perspektivischer Ansicht und ausschnittsweise den Halter mit Blick auf eine Oberseite zweier Lagerabschnitte, an denen der motorseitige erste Steckverbinder schwenkbar gelagert ist;
- Figur 5: ausschnittsweise und in vergrößertem Maßstab den motorseitigen ersten Steckverbinder mit Blick auf eine Anfederung an dem Halter;
- Figur 6: in Seitenansicht einen als Träger ausgebildeten Fahrradrahmen aus dem Stand der Technik, der ein Rahmenteil mit hieran festgelegtem Akku aufweist, der in der Figur 6 in einer Entnahmelage dargestellt ist.

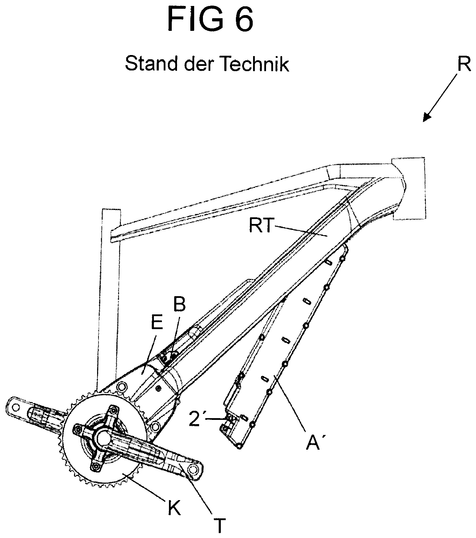

Die Figur 6 zeigt eine aus dem Stand der Technik, zum Beispiel der EP 3 118 096 A1, bekannte Ausführung für eine elektromotorische Antriebsvorrichtung für ein Elektrofahrrad an einem Fahrradrahmen R. Der Fahrradrahmen R weist mehrere miteinander verbundene Rahmenrohre auf, hierunter insbesondere ein Rahmenteil in Form eines Unterrohrs RT. Insbesondere an diesem Unterrohr RT ist ein Gehäuse eines Elektromotors E fixiert. Mit diesem Elektromotor E gekoppelt ist ein Kettenblatt K, das zusätzlich auch über eine Tretkurbel T angetrieben werden kann.

Für die Versorgung Elektromotors E mit elektrischer Energie ist eine Energiespeichereinheit A' in Form eines Akkus vorgesehen. Dieser Akku A' ist an dem Unterrohr RT befestigt. Hierbei kann der längserstreckte Akku A' an einem von dem Elektromotor E abgewandten Ende des Unterrohrs RT in eine Aufnahme des Unterrohrs RT eingeschoben werden. Über das eingeschobene Ende des Akkus A' kann dann das vordere Ende des Akkus A' in die an der Unterseite des Unterrohrs RT ausgebildete Aufnahme eingeklappt werden.

An dem einzuklappenden Ende des Akkus A' ist ein akkuseitiger (zweiter) Steckverbinder in Form eines Anschlusssteckers 2' vorgesehen. Dieser akkuseitige Anschlussstecker 2' wird an einen innerhalb der Aufnahme des Unterrohrs RT vorgesehenen motorseitigen (ersten) Steckverbinder in Form eines Anschlusssteckers gesteckt, wenn der Akku A' bestimmungsgemäß vollständig in die Aufnahme des Unterrohrs RT eingeklappt und hierin aufgenommen ist. Zum Lösen des Akkus A' von dem Unterrohr RT und insbesondere zum Lösen der elektrisch leitenden Verbindung zwischen den Anschlusssteckern ist an der Oberseite des Unterrohrs RT ein Betätigungsgriff B vorgesehen.

Während die spezifisch ausgebildeten Anschlussstecker, insbesondere der akkuseitige Anschlussstecker 2' der aus dem Stand der Technik bekannten Ausführungsvariante einer Antriebsvorrichtung der Figur 6 jeweils starr und unbeweglich sind und damit erst und ausschließlich bei einem vollständigen Einsetzen des Akkus A' in die Aufnahme des Unterrohrs RT miteinander bestimmungsgemäß gekoppelt sind, sieht eine Ausführungsvariante der vorgeschlagenen Lösung vor, dass ein trägerseitiger respektive motorseitiger Steckverbinder schwenkbar gelagert ist.

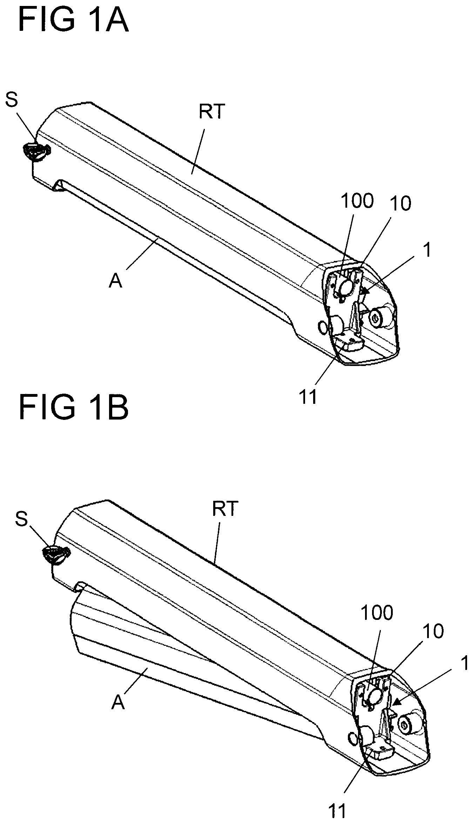

Bei der in den Figuren 1A bis 5 dargestellten Ausführungsvariante ist hierfür an einem Rahmenteil RT eines Fahrradrahmens ein Halter 1 fixiert, der einen motorseitigen Anschlussstecker 100 schwenkbar lagert. Das Rahmenteil RT, zum Beispiel in Form eines Unterrohres entsprechend dem Fahrradrahmen R der Figur 6, definiert hierbei in seinem Inneren eine Aufnahme für einen Akku A. Dieser Akku A wird an dem Halter 1 angesetzt, sodass der Akku A um eine an dem Halter 1 definierte zweite Schwenkachse D2 in die Aufnahme an dem Rahmenteil RT geschwenkt werden kann. Hierbei ist der Akku A bereits in einer nicht vollständig eingeklappten Position über eine Kopplung eines akkuseitigen Anschlusssteckers 2 mit dem motorseitigen Anschlussstecker 100 mit einem Elektromotor (z.B. einem Elektromotor E entsprechend der Figur 6) elektrisch verbunden. Mit bereits bestehender elektrischer Verbindung zu dem Elektromotor kann dann der Akku A in seine Betriebslage eingeklappt werden. Indem der motorseitige Anschlussstecker 100 an dem Halter 1 um eine erste Schwenkachse D1 schwenkbar gelagert ist, die parallel zur zweiten Schwenkachse D2 verläuft, kann der motorseitige Anschlussstecker 100 eine solche Einklapp- oder Schwenkbewegung um die zweite Schwenkachse D2 nachvollziehen.

In der Figur 1A ist das Rahmenteil RT mit eingeklapptem und damit seiner Betriebslage befindlichen Akku A dargestellt. Aus der perspektivischen Ansicht der Figur 1A ist dabei insbesondere ersichtlich, dass der Halter 1 für die schwenkbare Lagerung des motorseitigen Anschlusssteckers 100 in Seitenansicht L-förmig ausgebildet ist. Hierbei ist der Halter über eine Basis 11 an einer Innenwand innerhalb des hohlen Rahmenteils RT fixiert. Von der Basis 11 erstreckt sich ein Lagerbereich 10, an dem der motorseitige Anschlussstecker 100 schwenkbar gelagert ist.

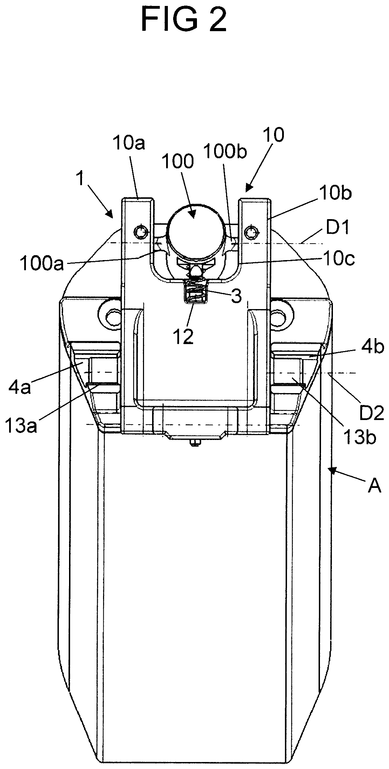

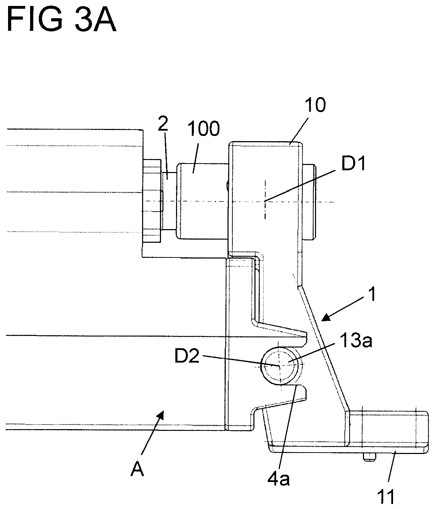

Über ein Schloss S kann der Akku A in der Betriebslage der Figur 1A verriegelt werden. Wird das Schloss S geöffnet, kann der Akku A von dem Rahmenteil RT entnommen werden, beispielsweise um den Akku A an einem separaten Ladegerät zu laden. Für die Entnahme von dem Rahmenteilen RT wird dabei der Akku A um die zweite Schwenkachse D2 (vergleiche insbesondere Figuren 2 und 3A-3B) nach außen geschwenkt, sodass ein dem Halter 1 abgewandtes Ende des Akkus A aus dem Inneren des Rahmenteils RT herausgeklappt wird.

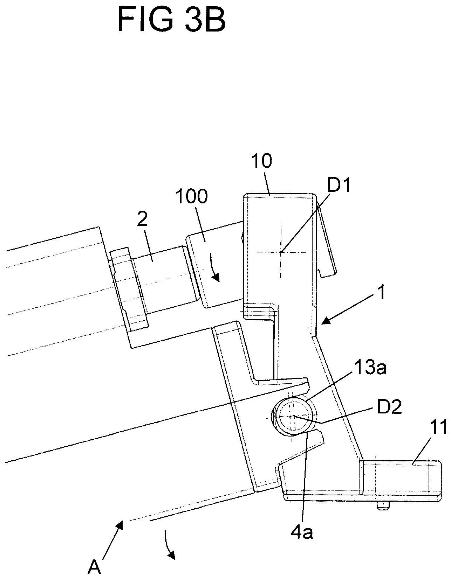

Wie in der Zusammenschau der Figuren 2, 3A und 3B ersichtlich ist, weist der Akku A an seinem dem Halter 1 zugewandten anderen Ende zwei Steckabschnitte jeweils in Form eines Steckmauls 4a, 4b auf. Über jedes Steckmaul 4a, 4b ist der Akku A an einen Drehlagerabschnitt in Form eines Drehlagerzapfens 13a oder 13b des Halters 1 gesteckt. Diese Drehlagerzapfens 13a und 13b stehen an voneinander abgewandten Seiten des Halters 1 vor und definieren körperlich die zweite Schwenkachse D2 für den Akku A. Über die Steckmäuler 4a, 4b ist der Akku A beiderseits des Halters 1 an die Drehlagerzapfen 13a und 13b steckt, sodass jeder Drehlagerzapfens 13a und 13b jeweils von einem zugeordneten Steckmaul 4a, 4b umgriffen ist und damit eine formschlüssige Verbindung zwischen Akku A und dem Halter 1 hergestellt, über die der Akku A an dem Halter 1 zwischen seiner Betriebslage und seiner Entnahmelage schwenkbar ist. Über die entlang einer Längsachse des Akkus A zu einer Seite hin offenen Steckmäuler 4a und 4b kann der Akku A hierbei auch über das zugehörige Ende entlang der Längsachse des Akkus A an den Halter 1 gesteckt werden. Anschließend wird der Akku A aus der hierüber eingenommenen Entnahmelage in eine Betriebslage geschwenkt, in der der Akku A in der Aufnahme des Rahmenteils RT aufgenommen ist.

Der akkuseitige zweite Anschlussstecker 2 ist vorliegend als Rundstecker ausgebildet und wird in eine Buchse des motorseitigen ersten Anschlusssteckers 100 gesteckt, um eine elektrisch leitende Verbindung zwischen dem Akku A und dem Elektromotor herzustellen. Insbesondere um hierbei die Verwendung standardisierter und handelsüblicher Anschlussstecker 100 und 2 zu ermöglichen, ist der motorseitige Anschlussstecker 100 an einem U-förmigen oberen Ende des Lagerbereichs 10 um die erste Schwenkachse D1 schwenkbar gelagert. Hierfür weist der motorseitige erste Anschlussstecker 100 zwei Drehlagerzapfen 100a und 100b als steckerseitige Drehlagerabschnitte auf. Jeder Drehlagerzapfen 100a, 100b des Anschlusssteckers 100 ist an einem zugeordneten Lagerabschnitt des Lagerbereichs 10 in Form eines Lagerschenkels 10a oder 10b schwenkbar gelagert. Zwischen den Lagerschenkeln 10a und 10b ist ein Zwischenraum 10c gebildet, in dem der motorseitige erste Anschlussstecker 100 aufgenommen und über die an den Lagerschenkeln 10a und 10b drehbar gehaltenen Drehlagerzapfen 100a und 100b schwenkbar gelagert ist.

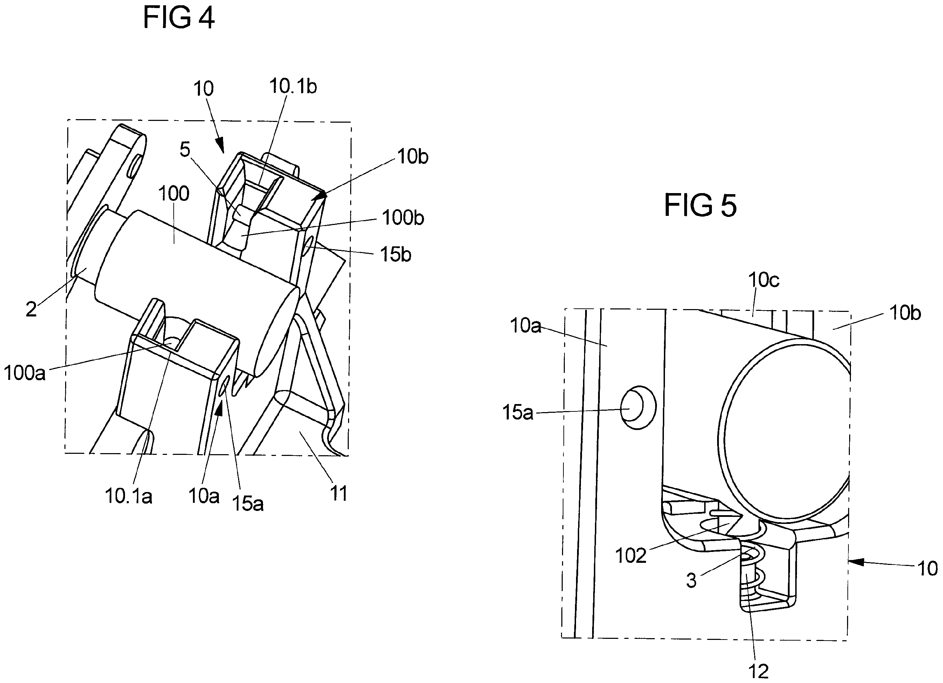

Wie insbesondere aus der perspektivischen Draufsicht der Figur 4 ersichtlich ist, bildet jeder der Lagerschenkel 10a, 10b eine Lagerführung in Form eines Lagerschlitzes 10.1a oder 10.1b aus. Die Lagerschlitze 10.1a und 10.1b laufen hierbei parallel zueinander und senkrecht zur ersten Schwenkachse D1. Nach oben hin, d.h. zu einem freien von der Basis 11 abgewandten Enden der Lagerschenkel 10a und 10b hin, sind die Lagerschlitze 10.1a und 10.1b jeweils offen, sodass der motorseitige Anschlussstecker 100 bei der Montage mit seinen steckerseitigen Drehlagerzapfen 100a und 100b von oben an den Lagerbereich 10 eingesetzt werden kann. Um anschließend ein Entfernen des motorseitigen Anschlussdeckers 100 von dem Lagerbereich 10 des Halters 1 zu verhindern, ist an jedem Lagerschenkel 10a, 10b ein Sicherungsstift 5 eingesetzt. Dieser Sicherungsstift 5 ist in eine Stiftbohrung 15a oder 15b eines Lagerschenkels 10a oder 10b eingesteckt, sodass sich der Sicherungsstift 5 jeweils mit einem Abschnitt durch den jeweiligen Lagerschlitz 10.1a oder 10.1b erstreckt. Hierüber blockiert der Sicherungsstift 5 jeweils eine Verlagerung des in dem jeweiligen Lagerschlitz 10.1a oder 10.1b gehaltenen steckerseitigen Drehlagerzapfens 100a oder 100b über ein zulässiges Maß hinaus in Richtung des Endes des jeweiligen Lagerschenkels 10a oder 10b. Über den starren Sicherungsstift 5 hinweg kann somit ein steckerseitiger Drehlagerzapfen 100a, 100b nicht verschoben werden.

Über ein Federelement in Form einer Druckfeder 3 wird der motorseitige erste Anschlussstecker 100 an dem Lagerbereich 10 in Richtung der freien Enden der Lagerschenkel 10a und 10b vorgespannt. Die sich sowohl an dem motorseitigen ersten Anschlussstecker 100 als auch an dem Lagerbereich 10 abstützende Druckfeder 3 drückt dementsprechend den motorseitigen ersten Anschlussstecker 100 in eine Richtung senkrecht zu der ersten Schwenkachse D1. Der motorseitige erste Anschlussstecker 100 ist somit an dem Lagerbereich 10 des Halters 1 nicht nur um die erste Schwenkachse D1 schwenkbar gelagert, sondern auch über die Lagerschlitze 10.1a und 10.1b längsverschieblich, und zwar senkrecht zu der ersten Schwenkachse D1. Dabei ist der motorseitige erste Anschlussstecker 100 über die Druckfeder 3 senkrecht zu der ersten Schwenkachse D1 angefedert.

Die Anfederung des motorseitigen ersten Anschlussdeckers 100 gewährleistet hierbei beim Anstecken des Akkus A eine selbsttätige zentrierte Ausrichtung des motorseitigen ersten Anschlussdeckers 100 an dem Lagerbereich 10 des Halters 1. Zudem ist über die Anfederung und die damit verbundene zusätzliche Verlagerbarkeit des motorseitigen ersten Anschlusssteckers 100 eine Kopplung mit dem akkuseitigen zweiten Anschlussstecker 2 beim Ansetzen des Akkus A an das Rahmenteil RT erleichtert. Zur Positionierung der Druckfeder 3 an dem motorseitigen ersten Anschlussstecker 100 weist dieser einen vorspringenden Federzapfen 102 auf, an den ein Ende der Druckfeder 3 gesteckt ist. Im Bereich des Zwischenraums 10c ist ferner durch den Lagerbereich 10 ein halterseitiger Federzapfen 12 an einem die beiden Lagerschenkel 10a und 10b verbindenden Verbindungsabschnitt ausgebildet, an den das andere Ende der Druckfeder 3 gesteckt ist. Derart nimmt die Druckfeder 3 eine definierte Lage an dem Halter 1 ein und spannt den motorseitigen ersten Anschlussstecker 100 gegen den Halter 1 vor.

Für eine Entnahme des Akkus A von dem Rahmenteil RT wird - nach Lösen der Verriegelung durch das Schloss S - der Akku A aus der in den Figuren 1A und 3A dargestellten Betriebslage um die an dem Halter 1 ausgebildeten Drehlagerzapfen 13a und 13b geschwenkt, sodass ein Ende des Akkus A aus der Aufnahme des Rahmenteils RT nach außen geklappt ist. Dieser Schwenkbewegung um die zweite Schwenkachse D2 folgt der motorseitige erste Anschlussstecker 100, der an dem Halter 1 um die erste Schwenkachse D1 schwenkbar gelagert und zusätzlich senkrecht hierzu angefedert verschieblich ist.

Wurde der Akku A um einen vorgegebenen Schwenkwinkel, zum Beispiel im Bereich von 10° bis 25°, nach außen in eine Entnahmelage entsprechend den Figuren 1B, 2 und 3B geschwenkt, können die Steckverbindung zwischen den Anschlusssteckern 100 und 2 sowie die Steckverbindungen zwischen den Steckmäulern 4a und 4b und den zugeordneten Drehlagerzapfen 13a und 13b des Halters 1 gelöst werden, indem der Akku A einfach senkrecht zu der zweiten Schwenkachse D2 und vorliegend entlang der Längsachse des Akkus A von dem Halter 1 abgezogen wird.

Soll der Akku A wieder an das Rahmenteil RT angebracht werden, wird umgekehrt der Akku A über seine Steckmäuler 4a und 4b in einer bezüglich des Rahmenteils RT abgewinkelten Entnahmelage an die Drehlagerzapfen 13a und 13b des Halters 1 gesteckt. Aus der derart eingenommen Entnahmelage, in der dann auch bereits die Anschlussstecker 2 und 100 miteinander verbunden werden können, um eine elektrische Verbindung zwischen dem Akku A und einem Elektromotor des Elektrofahrrades herzustellen, wird dann der Akku A in seine Betriebslage um die zweite Schwenkachse D2 an den Drehlagerzapfen 13a und 13b geschwenkt, bis der Akku A maximal in die Aufnahme des Rahmenteils RT eingeklappt ist.

Über den beidseitig an den Lagerschenkeln 10a und 10b schwenkbar gelagerten trägerseitigen und damit motorseitigen ersten Anschlussstecker 100, der in der dargestellten Ausführungsvariante zusätzlich senkrecht zu seiner ersten Schwenkachse D1 angefedert ist, wird eine mechanische Einschwenkhilfe für den an dem Rahmenteil RT anzubringenden und hieran festzulegenden Akku A bereitgestellt. Diese Einschwenkhilfe ermöglicht dabei nicht nur ein einfaches Anbringen des Akkus A an das Rahmenteil RT und ein einfaches Entfernen des Akkus A von dem Rahmenteil RT. Vielmehr ist hierüber auch ermöglicht, anstelle spezifischer Anschlussstecker 2 und 100 handelsübliche Steckverbinder, z.B. jeweils in Form eines Rundsteckers, zu verwenden.

### Bezugszeichenliste

- 1: Halter
- 10: Lagerbereich
- 10.1a, 10.1b: Lagerschlitz (Lagerführung)
- 100: Motorseitiger Anschlussstecker (1. Steckverbinder)
- 100a, 100b: Drehlagerzapfen (steckerseitiger Drehlagerabschnitt)
- 102: Federzapfen
- 10a, 10b: Lagerschenkel
- 10c: Zwischenraum
- 11: Basis
- 12: Federzapfen
- 13a, 13b: Drehlagerzapfen (halterseitiger Drehlagerabschnitt)
- 15a, 15b: Stiftbohrung
- 2, 2': Akkuseitiger Anschlussstecker (2. Steckverbinder)
- 3: Druckfeder (Federelement)
- 4a, 4b: Steckmaul (Steckabschnitt)
- 5: Sicherungsstift
- A, A': Akku (Energiespeichereinheit)
- B: Betätigungsgriff
- D1, D2: Schwenkachse
- E: Elektromotor
- K: Kettenblatt
- R: Fahrradrahmen (Träger)
- RT: Unterrohr (Rahmenteil / Träger)
- S: Schloss
- T: Tretkurbel

## Patentansprüche

1. Antriebsvorrichtung für ein Elektrofahrrad (1), mit
- einem Elektromotor (E),
- einer Energiespeichereinheit (A) zur Versorgung des Elektromotors (E) mit elektrischer Energie, und
- einem Träger (R, RT), an dem die Energiespeichereinheit (A) lösbar gehalten ist,
wobei, zur Verbindung der Energiespeichereinheit (A) mit dem Elektromotor (E), an der Energiespeichereinheit (A) ein zweiter Steckverbinder (2) und an dem Träger (R, RT) ein mit dem zweiten Steckverbinder (2) verbundener, erster Steckverbinder (100) vorgesehen sind, und
wobei der erste Steckverbinder (100) an dem Träger (R, RT) um eine erste Schwenkachse (D1) schwenkbar gelagert ist, wobei der erste Steckverbinder (100) an einem Verbinderbauteil ausgebildet ist, das an einem Halter (1) des Trägers um die erste Schwenkachse (D1) schwenkbar gelagert ist,
**dadurch gekennzeichnet, dass**
die Energiespeichereinheit (A) an dem Halter (1) um eine zweite Schwenkachse (D2) schwenkbar gehalten ist, wobei die erste Schwenkachse (D1) beabstandet und parallel zur zweiten Schwenkachse (D2) verläuft.

2. Antriebsvorrichtung nach Anspruch 1, **dadurch gekennzeichnet, dass** das Verbinderbauteil zwei Drehlagerabschnitte (100a, 100b) ausbildet, über die das Verbinderbauteil an dem Halter (1) schwenkbar gelagert ist.

3. Antriebsvorrichtung nach Anspruch 2, **dadurch gekennzeichnet, dass** das Verbinderbauteil zumindest teilweise in einem Zwischenraum (10c) zwischen zwei Lagerabschnitten (10a, 10b) des Halters (1) aufgenommen ist und über die zwei Drehlagerabschnitte (100a, 100b) an den zwei Lagerabschnitten (10a, 10b) schwenkbar gelagert ist.

4. Antriebsvorrichtung nach einem der Ansprüche 1 bis 3, **dadurch gekennzeichnet, dass** an der Energiespeichereinheit (A) mindestens ein Steckabschnitt (4a, 4b) vorgesehen ist, der an einen die zweite Schwenkachse (D2) definierenden Drehlagerabschnitt (13a, 13b) des Halters (1) gesteckt ist.

5. Antriebsvorrichtung nach Anspruch 4, **dadurch gekennzeichnet, dass** die Energiespeichereinheit (A) um die zweite Schwenkachse (D2) zwischen einer Betriebslage und einer Entnahmelage schwenkbar ist und in der Entnahmelage der Steckabschnitt (4a, 4b) von dem Drehlagerabschnitt (13a, 13b) abgezogen werden kann, um die Energiespeichereinheit (A) von dem Träger (R, RT) zu entfernen.

6. Antriebsvorrichtung nach Anspruch 5, **dadurch gekennzeichnet, dass** die zweite Schwenkachse (D2) für die Energiespeichereinheit (A) parallel zu der ersten Schwenkachse (D1) für den ersten Steckverbinder (100) verläuft.

7. Antriebsvorrichtung nach einem der vorhergehenden Ansprüche, **dadurch gekennzeichnet, dass** der erste Steckverbinder (100) an dem Träger (R, RT) senkrecht zu der ersten Schwenkachse (D1) verlagerbar gehalten ist.

8. Antriebsvorrichtung nach Anspruch 2 oder 3 und nach Anspruch 7, **dadurch gekennzeichnet, dass** das Verbinderbauteil über die zwei Drehlagerabschnitte (100a, 100b) an dem Halter (1) sowohl um die erste Schwenkachse (D1) schwenkbar gelagert als auch senkrecht zu der ersten Schwenkachse (D1) verlagerbar gehalten ist.

9. Antriebsvorrichtung nach Anspruch 8, **dadurch gekennzeichnet, dass** die Drehlagerabschnitte (100a, 100b) jeweils in einer sich senkrecht zu der ersten Schwenkachse (D1) erstreckenden Lagerführung (10.1a, 10.1b) an einem zugeordneten Lagerabschnitt (10a, 10b) drehbar und verschieblich gelagert sind.

10. Antriebsvorrichtung nach einem der vorhergehenden Ansprüche, **dadurch gekennzeichnet, dass** der erste Steckverbinder (100) senkrecht zu der ersten Schwenkachse (D1) angefedert ist.

11. Antriebsvorrichtung nach den Ansprüchen 3 und 10, **dadurch gekennzeichnet, dass** der erste Steckverbinder (100) durch mindestens ein zwischen den beiden Lagerabschnitten (10a, 10b) angeordnetes Federelement (3) angefedert ist.

12. Antriebsvorrichtung nach einem der vorhergehenden Ansprüche, **dadurch gekennzeichnet, dass**
- der erste Steckverbinder (100) und/oder der zweite Steckverbinder (2) einen Rundstecker umfasst und/oder
- der Träger (R, RT) durch einen Rahmen (R) für das Elektrofahrrad gebildet ist oder durch ein an einen Rahmen (R) für das Elektrofahrrad zu montierendes Bauteil.

13. Antriebsvorrichtung für ein Elektrofahrrad (1), mit
- einem Elektromotor (E),
- einer Energiespeichereinheit (A) zur Versorgung des Elektromotors (E) mit elektrischer Energie, und
- einem Träger (R, RT), an dem die Energiespeichereinheit (A) lösbar gehalten ist,
wobei, zur Verbindung der Energiespeichereinheit (A) mit dem Elektromotor (E), an der Energiespeichereinheit (A) ein zweiter Steckverbinder (2) und an dem Träger (R, RT) ein mit dem zweiten Steckverbinder (2) verbundener, erster Steckverbinder (100) vorgesehen sind, und
wobei der erste Steckverbinder (100) an dem Träger (R, RT) um eine erste Schwenkachse (D1) schwenkbar gelagert ist, wobei der erste Steckverbinder (100) an einem Verbinderbauteil ausgebildet ist, das an einem Halter (1)) des Trägers um die erste Schwenkachse (D1) schwenkbar gelagert ist,
**dadurch gekennzeichnet, dass**
das Verbinderbauteil zwei Drehlagerabschnitte (100a, 100b) ausbildet, über die das Verbinderbauteil an dem Halter (1) schwenkbar gelagert ist, und das Verbinderbauteil
a) über die zwei Drehlagerabschnitte (100a, 100b) an dem Halter (1) sowohl um die erste Schwenkachse (D1) schwenkbar gelagert als auch senkrecht zu der ersten Schwenkachse (D1) verlagerbar gehalten ist, wobei der erste Steckverbinder (100) an dem Träger (R, RT) senkrecht zu der ersten Schwenkachse (D1) verlagerbar gehalten ist, und/oder
b) zumindest teilweise in einem Zwischenraum (10c) zwischen zwei Lagerabschnitten (10a, 10b) des Halters (1) aufgenommen ist und über die zwei Drehlagerabschnitte (100a, 100b) an den zwei Lagerabschnitten (10a, 10b) schwenkbar gelagert ist, wobei der erste Steckverbinder (100) durch mindestens ein zwischen den beiden Lagerabschnitten (10a, 10b) angeordnetes Federelement (3) senkrecht zu der ersten Schwenkachse (D1) angefedert ist.

14. Elektrofahrrad mit einer Antriebsvorrichtung (A) nach einem der vorhergehenden Ansprüche.

## Claims

1. Drive apparatus for an electric bicycle (1) with
- an electric motor (E),
- an energy storage unit (A) for supplying the electric motor (E) with electrical energy, and
- a carrier (R, RT) at which the energy storage unit (A) is releasably held,
wherein a second plug connector (2) is provided at the energy storage unit (A) and a first plug connector (100) is provided at the carrier (R, RT) which plug connector is connected to the second plug connector (2) to connect the energy storage unit (A) to the electric motor (E), and
wherein the first plug connector (100) is mounted in a pivotable manner at the carrier (R, RT) about a first pivot axis (D1), wherein the first plug connector (100) is constructed at a connecting component that is mounted in a pivotable manner at a holder (1) of the carrier (R, RT) about the first pivot axis (D1),
**characterized in that**
the energy storage unit (A) is mounted in a pivotable manner at the holder (1) about a second pivot axis (D2), wherein the first pivot axis (D1) runs spaced and parallel to the second pivot axis (D2).

2. Drive apparatus according to Claim 1, **characterized in that** the connecting component forms two pivot bearing sections (100a, 100b) by means of which the connecting component is mounted in a pivotable manner at the holder (1).

3. Drive apparatus according to Claim 2, **characterized in that** the connecting component is accommodated at least partially in an intermediate space (10c) between two bearing sections (10a, 10b) of the holder (1), and is mounted in a pivotable manner by way of the two pivot bearing sections (100a, 100b) at the two bearing sections (10a, 10b).

4. Drive apparatus according to one of Claims 1 to 3, **characterized in that** at least one plug section (4a, 4b) is provided at the energy storage unit (A) which section is inserted at a pivot bearing section (13a, 13b) of the holder (1) that defines the second pivot axis (D2).

5. Drive apparatus according to Claim 4, **characterized in that** the energy storage unit (A) can be pivoted about the second pivot axis (D2) between an operating position and a removal position, and in the removal position the plug section (4a, 4b) can be withdrawn from the pivot bearing section (13a, 13b) in order to remove the energy storage unit (A) from the carrier (R, RT).

6. Drive apparatus according to Claim 5, **characterized in that** the second pivot axis (D2) for the energy storage unit (A) runs parallel to the first pivot axis (D1) for the first plug connector (100).

7. Drive apparatus according to one of the preceding claims, **characterized in that** the first plug connector (100) is mounted in a repositionable manner at the carrier (R, RT) perpendicular to the first pivot axis (D1).

8. Drive apparatus according to Claim 2 or 3 and according to Claim 7, **characterized in that** the connecting component is mounted in a pivotable manner by means of the two pivot bearing sections (100a, 100b) at the holder (1) about the first pivot axis (D1) and also is mounted in a repositionable manner perpendicular to the first pivot axis (D1).

9. Drive apparatus according to Claim 8, **characterized in that** the pivot bearing sections (100a, 100b) are each mounted rotatably and in a repositionable manner in a bearing guide (10.1a, 10.1b) that extends perpendicularly to the first pivot axis (S1) at an associated bearing section (10a, 10b).

10. Drive apparatus according to one of the preceding claims, **characterized in that** the first plug connector (100) is spring-loaded perpendicularly to the first pivot axis (D1).

11. Drive apparatus according to Claims 3 and 10, **characterized in that** the first plug connector (100) is spring-loaded by at least one spring element (3) arranged between the two bearing sections (10a, 10b).

12. Drive apparatus according to one of the preceding claims, **characterized in that**
- the first plug connector (100) and/or the second plug connector (2) comprises a round plug,
- and/or the carrier (R, RT) is formed by a frame (R) for the electric bicycle or by a component that is to be mounted on a frame (R) for the electric bicycle.

13. Drive apparatus for an electric bicycle (1) with
- an electric motor (E),
- an energy storage unit (A) for supplying the electric motor (E) with electrical energy, and
- a carrier (R, RT) at which the energy storage unit (A) is releasably held,
wherein a second plug connector (2) is provided at the energy storage unit (A) and a first plug connector (100) is provided at the carrier (R, RT) which plug connector is connected to the second plug connector (2) to connect the energy storage unit (A) to the electric motor (E), and
wherein the first plug connector (100) is mounted in a pivotable manner at the carrier (R, RT) about a first pivot axis (D1), wherein the first plug connector (100) is constructed at a connecting component that is mounted in a pivotable manner at a holder (1) of the carrier (R, RT) about the first pivot axis (D1),
**characterized in that**
the connecting component forms two pivot bearing sections (100a, 100b) by means of which the connecting component is mounted in a pivotable manner at the holder (1) and the connecting component
a) is mounted in a pivotable manner by means of the two pivot bearing sections (100a, 100b) at the holder (1) about the first pivot axis (D1) and also is mounted in a repositionable manner perpendicular to the first pivot axis (D1), and/or
b) is accommodated at least partially in an intermediate space (10c) between two bearing sections (10a, 10b) of the holder (1), and is mounted in a pivotable manner by way of the two pivot bearing sections (100a, 100b) at the two bearing sections (10a, 10b), wherein the first plug connector (100) is spring-loaded by at least one spring element (3) arranged between the two bearing sections (10a, 10b) perpendicularly to the first pivot axis (D1).

14. Electric bicycle with a drive apparatus (A) according to one of the preceding claims.

## Revendications

1. Dispositif d'entraînement pour une bicyclette électrique (1), avec
- un moteur électrique (E)
- une unité d'accumulateur d'énergie (A) pour l'alimentation du moteur électrique (E) avec de l'énergie électrique, et
- un support (R, RT) au niveau duquel l'unité d'accumulateur d'énergie (A) est maintenue de manière détachable, dans lequel pour la liaison de l'unité d'accumulateur d'énergie (A) avec le moteur électrique (E), au niveau de l'unité d'accumulateur d'énergie (A) un second connecteur enfichable (2) et au niveau du support (R, RT) un premier connecteur enfichable (100) relié au second connecteur enfichable (2) sont prévus, et
dans lequel le premier connecteur enfichable (100) est logé de manière pivotante au niveau du support (R, RT) autour d'un premier axe de pivotement (D1), dans lequel le premier connecteur enfichable (100) est réalisé au niveau d'un composant connecteur qui est logé de manière pivotante au niveau d'un élément porteur (1) du support autour du premier axe de pivotement (D1),
**caractérisé en ce que**
l'unité d'accumulateur d'énergie (A) est maintenue de manière pivotante au niveau du support (1) autour d'un second axe de pivotement (D2), dans lequel le premier axe de pivotement (D1) s'étend à distance et parallèlement au second axe de pivotement (D2).

2. Dispositif d'entraînement selon la revendication 1, **caractérisé en ce que** le composant connecteur réalise deux sections de palier rotatif (100a, 100b), par lesquelles le composant connecteur est logé de manière pivotante au niveau de l'élément porteur (1).

3. Dispositif d'entraînement selon la revendication 2, **caractérisé en ce que** le composant connecteur est reçu au moins partiellement dans un espace intermédiaire (10c) entre deux sections de palier (10a, 10b) de l'élément porteur (1) et est logé de manière pivotante par le biais des deux sections de palier rotatif (100a, 100b) au niveau des deux sections de palier (10a, 10b).

4. Dispositif d'entraînement selon l'une quelconque des revendications 1 à 3, **caractérisé en ce qu'**au moins une section d'enfichage (4a, 4b) est prévue au niveau de l'unité d'accumulateur d'énergie (A), laquelle section est enfichée au niveau d'une section de palier rotatif (13a, 13b) de l'élément porteur (1) définissant le second axe de pivotement (D2).

5. Dispositif d'entraînement selon la revendication 4, **caractérisé en ce que** l'unité d'accumulateur d'énergie (A) est pivotante autour du second axe de pivotement (D2) entre une position de fonctionnement et une position de retrait et dans la position de retrait la section d'enfichage (4a, 4b) peut être extraite de la section de palier rotatif (13a, 13b) afin d'enlever l'unité d'accumulateur d'énergie (A) du support (R, RT).

6. Dispositif d'entraînement selon la revendication 5, **caractérisé en ce que** le second axe de pivotement (D2) pour l'unité d'accumulateur d'énergie (A) s'étend parallèlement au premier axe de pivotement (D1) pour le premier connecteur enfichable (100).

7. Dispositif d'entraînement selon l'une quelconque des revendications précédentes, **caractérisé en ce que** le premier connecteur enfichable (100) est maintenu de manière déplaçable au niveau du support (R, RT) perpendiculairement au premier axe de pivotement (D1).

8. Dispositif d'entraînement selon la revendication 2 ou 3 et selon la revendication 7, **caractérisé en ce que** le composant connecteur est logé de manière pivotante par le biais des deux sections de palier rotatif (100a, 100b) au niveau du support (1) non seulement autour du premier axe de pivotement (D1), mais est aussi maintenu de manière déplaçable perpendiculairement au premier axe de pivotement (D1).

9. Dispositif d'entraînement selon la revendication 8, **caractérisé en ce que** les sections de palier rotatif (100a, 100b) sont logées de manière rotative et mobile respectivement dans un guidage de palier (10.1a, 10.1 b) s'étendant perpendiculairement au premier axe de pivotement (D1) au niveau d'une section de palier (10a, 10b) associée.

10. Dispositif d'entraînement selon l'une quelconque des revendications précédentes, **caractérisé en ce que** le premier connecteur enfichable (100) est chargé par ressort perpendiculairement au premier axe de pivotement (D1).

11. Dispositif d'entraînement selon les revendications 3 et 10, **caractérisé en ce que** le premier connecteur enfichable (100) est chargé par ressort par au moins un élément de ressort (3) agencé entre les deux sections de palier (10a, 10b).

12. Dispositif d'entraînement selon l'une quelconque des revendications précédentes, **caractérisé en ce que**
- le premier connecteur enfichable (100) et/ou le second connecteur enfichable (2) comporte un connecteur coaxial et/ou
- le support (R, RT) est formé par un cadre (R) pour la bicyclette électrique ou par un composant à monter au niveau d'un cadre (R) pour la bicyclette électrique.

13. Dispositif d'entraînement pour une bicyclette électrique (1), avec
- un moteur électrique (E)
- une unité d'accumulateur d'énergie (A) pour l'alimentation du moteur électrique (E) avec de l'énergie électrique, et
- un support (R, RT) au niveau duquel l'unité d'accumulateur d'énergie (A) est maintenue de manière détachable, dans lequel pour la liaison de l'unité d'accumulateur d'énergie (A) avec le moteur électrique (E), au niveau de l'unité d'accumulateur d'énergie (A) un second connecteur enfichable (2) et au niveau du support (R, RT) un premier connecteur enfichable (100) relié au second connecteur enfichable (2) sont prévus, et
dans lequel le premier connecteur enfichable (100) est logé de manière pivotante au niveau du support (R, RT) autour d'un premier axe de pivotement (D1), dans lequel le premier connecteur enfichable (100) est réalisé au niveau d'un composant connecteur qui est logé de manière pivotante au niveau d'un élément porteur (1) du support autour du premier axe de pivotement (D1),
**caractérisé en ce que**
le composant connecteur réalise deux sections de palier rotatif (100a, 100b) par lesquelles le composant connecteur est logé de manière pivotante au niveau de l'élément porteur (1), et le composant connecteur
a) est logé de manière pivotante par le biais des deux sections de palier rotatif (100a, 100b) au niveau de l'élément porteur (1) non seulement autour du premier axe de pivotement (D1), mais est aussi maintenu de manière déplaçable perpendiculairement au premier axe de pivotement (D1), dans lequel le premier connecteur enfichable (100) est maintenu de manière déplaçable au niveau du support (R, RT) perpendiculairement au premier axe de pivotement (D1), et/ou
b) est reçu au moins partiellement dans un espace intermédiaire (10c) entre deux sections de palier (10a, 10b) de l'élément porteur (1) et est logé de manière pivotante par le biais des deux sections de palier rotatif (100a, 100b) au niveau des deux sections de palier (10a, 10b), dans lequel le premier connecteur enfichable (100) est chargé par ressort par au moins un élément de ressort (3) agencé entre les deux sections de palier (10a, 10b) perpendiculairement au premier axe de pivotement (D1).

14. Bicyclette électrique avec un dispositif d'entraînement (A) selon l'une quelconque des revendications précédentes.
